# EUROPÄISCHE PATENTANMELDUNG

(11) **EP 1 475 284 A2**
(43) Veröffentlichungstag der Anmeldung: **10.11.2004**
(21) Anmeldenummer: 04010746.8
(22) Anmeldetag: 06.05.2004
(51) Int. Cl.: B60R 25/00, B60R 25/04, G07C 9/00

(54) **Vorrichtung und Verfahren zur Öffnung und/oder zum Starten eines Kraftfahrzeuges**

(30) Priorität: 09.05.2003 DE 10320787
(71) Anmelder: Hella KG Hueck & Co., 59552 Lippstadt (DE)
(72) Erfinder: Schirrmann, Jörg, 33604 Bielefeld (DE); Dirkers, Helge, 59557 Lippstadt (DE); Scharwald, Lothar, 59558 Lippstadt (DE); Schütte, Guido, 59555 Lippstadt (DE); Bökenbrink, Maik, 33818 Leopoldshöhe (DE); Schneider, Klaus, 49393 Lohne (DE); Mehn, Michael, 59602 Rüthen (DE); Feldmann, Katrin, 59510 Lippetal (DE); Schniedertüns, Volker, 33154 Salzkotten (DE); Kemper, Ursula, 33102 Paderborn (DE); Reimann, Martin, 59071 Hamm (DE)

(57) **Zusammenfassung**

Vorrichtung für das Öffnen und/oder Starten eines Kraftfahrzeuges, umfassend eine Mehrzahl von Antennen (1, 2, 3, 4, 5), die beabstandet voneinander in oder an dem Kraftfahrzeug angeordnet sind, ein tragbares Schlüsselelement für die Authentifikation eines Benutzers, eine Steuereinheit (11), die die Mehrzahl von Antennen (1, 2, 3, 4, 5) ansteuern und über eine oder mehrere der Antennen (1, 2, 3, 4, 5) mit dem externen Schlüsselelement kommunizieren kann, wobei die Vorrichtung eine Multiplexeinheit umfasst, über die die Steuereinheit (11) die Mehrzahl von Antennen (1, 2, 3, 4, 5) ansteuern kann. Weiterhin betrifft die vorliegende Erfindung ein Verfahren zur Öffnung und/oder zum Starten eines Kraftfahrzeugs.

## Beschreibung

### STAND DER TECHNIK

Die vorliegende Erfindung betrifft eine Vorrichtung für das Öffnen und/oder Starten eines Kraftfahrzeugs, umfassend eine Mehrzahl von Antennen, die beabstandet voneinander in oder an dem Kraftfahrzeug angeordnet sind, ein tragbares Schlüsselelement für die Authentifikation eines Benutzers, eine Steuereinheit, die die Mehrzahl von Antennen ansteuern und über eine oder mehrere der Antennen mit dem externen Schlüsselelement kommunizieren kann. Weiterhin betrifft die vorliegende Erfindung ein Verfahren zur Öffnung und/oder zum Starten eines Kraftfahrzeugs, insbesondere mittels einer Vorrichtung der vorgenannten Art, wobei nach Betätigung eines Betätigungsmittels durch einen Benutzer die Steuereinheit zur Aufnahme eines Authentifikationsdialogs mit dem Schlüsselelement mindestens eine der Antennen ansteuert.

Eine Vorrichtung und ein Verfahren der vorgenannten Art sind aus der deutschen Patentschrift DE 197 18 764 C1 bekannt. Bei der darin beschriebenen Vorrichtung sind eine Mehrzahl von Antennen über das Kraftfahrzeug verteilt, wobei jeder der Antennen eine Sende- und Empfangseinheit zugeordnet ist. Diese Sende- und Empfangseinheiten werden von einer zentralen Steuereinheit angesteuert. Insbesondere wird nach Betätigung eines Betätigungsmittels durch einen Benutzer die Steuereinheit zur Aufnahme eines Authentifikationsdialogs mit dem Schlüsselelement mindestens zwei der Antennen ansteuern. Insbesondere werden diese beiden Antennen mit unterschiedlichen Antennenparametern angesteuert, wobei bei nicht erfolgreicher Authentifikation während des Dialogs diese Antennenparameter kontinuierlich oder in entsprechenden Schritten geändert werden können, um einen ungünstig orientierten als Schlüsselelement dienenden Transponder erfolgreich anzusprechen.

Als nachteilig bei einer Vorrichtung der vorgenannten Art erweist sich zum einen, dass die Antennen in dem Kraftfahrzeug aufgrund der einer jeder dieser Antennen zugeordneten Sendeund Empfangseinheit vergleichsweise aufwendig gestaltet sind. Als nachteilig bei dem Verfahren erweist sich, dass ein vergleichsweise hoher Ansteueraufwand betrieben werden muss, um zum einen zwei Antennen mit unterschiedlichen Antennenparametern zu betreiben und zum anderen diese Antennenparameter bei nicht erfolgreicher Authentifikation entsprechend zu ändern.

### VORTEILE DER ERFINDUNG

Das der vorliegenden Erfindung zugrundeliegende Problem ist die Schaffung einer Vorrichtung und eines Verfahrens der eingangs genannten Art, die einfacher aufgebaut beziehungsweise einfacher durchführbar sind.

Dies wird erfindungsgemäß hinsichtlich der Vorrichtung durch die Merkmale des Anspruchs 1 und hinsichtlich des Verfahrens durch die Merkmale des Anspruchs 10 erreicht.

Gemäß Anspruch 1 ist vorgesehen, dass die Vorrichtung eine Multiplexeinheit umfasst, über die die Steuereinheit die Mehrzahl von Antennen ansteuern kann. Durch Verwendung einer derartigen Multiplexeinheit muss nicht mehr einer jeder der Antennen eine eigene Sende- und Empfangseinheit zugeordnet werden. Vielmehr kann erfindungsgemäß vorgesehen sein, dass die Steuereinheit eine Sende- und Empfangseinheit umfasst, die über die Antennen mit dem tragbaren Schlüsselelement kommunizieren kann. Im Vergleich zum Stand der Technik muss hier somit nur noch eine einzige Sende- und Empfangseinheit vorgesehen werden.

Vorteilhafterweise ist dabei die Multiplexeinheit mit einer jeder der Antennen über ein der entsprechenden Antenne zugeordnetes Kabel verbunden. Im Gegensatz zu einer Lösung, bei der beispielsweise jede der Antennen an einem Bus angeschlossen ist und somit entsprechende Adressiermittel für die Kommunikation über den Bus benötigt, kann bei der Ausführung mit separaten Kabeln zu den einzelnen Antennen die Antenne als solche sehr einfach und damit kostengünstig aufgebaut sein.

Gemäß einer bevorzugten Ausführungsform der vorliegenden Erfindung weist die Multiplexeinheit eine Mehrzahl von Relais auf. Relais sind kostengünstige und einfach zu handhabende Bauteile.

Erfindungsgemäß kann vorgesehen sein, dass die Multiplexeinheit eine Anzahl von Relais aufweist, die der Anzahl von Antennen entspricht. Alternativ dazu kann die Multiplexeinheit eine Anzahl von Relais aufweisen, die um 1 kleiner ist als die Anzahl der Antennen. Hierbei können die Relais kaskadenartig geschaltet sein, so dass auch dann, wenn keines der Relais durchschaltet, eine der Antennen angesteuert wird. Auf diese Weise können die Kosten für die Multiplexeinheit weiter reduziert werden.

Alternativ dazu besteht die Möglichkeit, dass die Multiplexeinheit eine Mehrzahl von Halbleiterschaltern aufweist.

Das tragbare Schlüsselelement kann eine Sende- und Empfangseinheit umfassen und dabei insbesondere auch einen Transponder aufweisen.

Es besteht die Möglichkeit, dass die Steuereinheit die Antennen mit LF-Signalen, insbesondere im kHz-Bereich beispielsweise mit Signalen einer Frequenz von etwa 125 kHz ansteuern kann.

Erfindungsgemäß kann weiterhin vorgesehen sein, dass die Vorrichtung Betätigungsmittel für das Öffnen und/oder das Starten des Kraftfahrzeugs umfasst, wobei insbesondere die Öffnungsmittel als Türgriffe oder als Starterknopf ausgeführt sind. Es kann somit ähnlich wie bei dem Stand der Technik die Steuereinheit dann, wenn beispielsweise ein Türgriff betätigt wird, eine entsprechende Antenne ansteuern, um in einen Authentifikationsdialog mit dem Schlüsselelement zu treten.

Gemäß Anspruch 10 sieht das erfindungsgemäße Verfahren vor, dass dann, wenn sich über die angesteuerte Antenne kein Authentifikationsdialog mit dem Schlüsselelement führen lässt, die Steuereinheit eine andere der Antennen ansteuert. Insbesondere bei diesem Verfahren bietet die Multiplexeinheit den Vorteil, dass mit einfachen Mitteln die Antennen nacheinander angesteuert werden können, um letztlich die Antenne ausfindig zu machen, in deren Sendebereich das Schlüsselelement angeordnet ist. Dieses Verfahren ist wesentlich kostengünstiger durchführbar als das vergleichsweise komplizierte aus dem Stand der Technik bekannte Verfahren.

### ZEICHNUNGEN

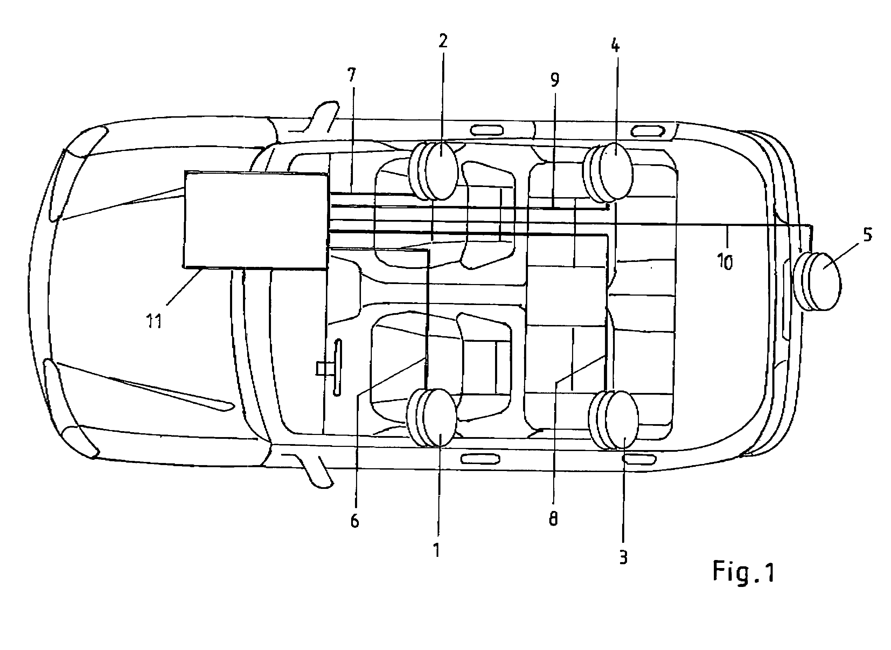

Weitere Merkmale und Vorteile der vorliegenden Erfindung werden deutlich anhand der nachfolgenden Beschreibung bevorzugter Ausführungsbeispiele unter Bezugnahme auf die beiliegende Abbildung. Darin zeigt
- Fig. 1: eine schematische Draufsicht auf ein Kraftfahrzeug mit einer erfindungsgemäßen Vorrichtung.

### BESCHREIBUNG DER AUSFÜHRUNGSBEISPIELE

Aus Fig. 1 ist schematisch ein Kraftfahrzeug ersichtlich, in oder an dem eine Mehrzahl von Antennen untergebracht sind. Dies sind eine Antenne 1 im Bereich des Fahrersitzes, eine Antenne 2 im Bereich des Beifahrersitzes, zwei Antennen 3, 4 im Bereich der Rücksitze und eine Antenne 5 im Bereich des Kofferraums. Die Antennen 1, 2, 3, 4, 5 sind jeweils über ein Kabel 6, 7, 8, 9, 10 mit einer zentralen Steuereinheit 11 verbunden.

In dem Steuergerät ist eine Sende- und Empfangseinheit untergeordnet, die über eine Multiplexeinheit mit einem der Kabel 6, 7, 8, 9, 10 und damit mit einer der an den Enden dieser Kabel 6, 7, 8, 9, 10 angeordneten Antennen 1, 2, 3, 4, 5 verbunden werden kann. Die Multiplexeinheit kann beispielsweise aus einer Mehrzahl von Relais bestehen. Beispielsweise können für fünf Antennen fünf Relais vorhanden sein. Weiterhin besteht die Möglichkeit, für fünf Antennen nur vier Relais vorzusehen, die beispielsweise derart miteinander verbunden sind, dass dann, wenn keines der Relais durchschaltet, die Antenne 1 angesteuert wird, dann, wenn das erste Relais durchschaltet, die Antenne 2 angesteuert wird, dann, wenn das zweite Relais durchschaltet, die Antenne 3 angesteuert wird, dann, wenn das dritte Relais durchschaltet, die Antenne 4 angesteuert wird, und dann, wenn das vierte Relais durchschaltet, die Antenne 5 angesteuert wird.

Die erfindungsgemäße Vorrichtung umfasst weiterhin ein tragbares Schlüsselelement für die Authentifikation eines Benutzers. Ein derartiges Schlüsselelement umfasst eine Sendeund Empfangseinheit für die Kommunikation mit der Steuereinheit und kann beispielsweise als Transponder ausgeführt sein. Ein derartiges Schlüsselelement kann zum Beispiel auf einer Chipkarte oder in einem Schlüssel untergebracht sein.

Weiterhin kann die erfindungsgemäße Vorrichtung Betätigungsmittel umfassen. Als Betätigungsmittel können hier beispielsweise die an der Außenseite des Kraftfahrzeuges angeordneten Türgriffe dienen. Weiterhin können als Betätigungsmittel die an der Innenseite des Kraftfahrzeugs angeordneten Türgriffe dienen. Weiterhin kann beispielsweise ein Starterknopf als Betätigungsmittel dienen.

Wenn ein Benutzer ein Betätigungsmittel betätigt, beispielsweise wenn ein Benutzer einen äußeren Türgriff betätigt, kann diese Betätigung die Steuereinheit dazu veranlassen, die in der Nähe des beispielsweise an der Fahrertür angeordneten Türgriffes angeordnete Antenne 1 anzusteuern und in einen Authentifikationsdialog mit dem von dem Benutzer mitgeführten tragbaren Schlüsselelement zu treten. Bei erfolgter Authentifizierung kann die Steuereinheit den Verschlussmechanismus der Tür entriegeln, so dass der Benutzer die Tür öffnen kann. Beispielsweise wenn der Benutzer das Fahrzeug mittels eines Starterknopfes starten will, veranlasst die Betätigung des Starterknopfes die Steuereinheit dazu, über die im Bereich des Fahrersitzes angeordnete Antenne 1 mit dem tragbaren Schlüsselelement in einen Authentifikationsdialog einzutreten. Es besteht hierbei die Möglichkeit, dass sich das Schlüsselelement beispielsweise in dem Sakko des Benutzers auf dem Rücksitz oder gar im Kofferraum des Kraftfahrzeugs befindet. In diesem Fall wird die Sendeleistung der im Bereich des Fahrersitzes angeordneten Antenne 1 nicht ausreichend sein, um einen eindeutigen Authentifikationsdialog mit dem Schlüsselelement zu führen. Dementsprechend schaltet die Steuereinheit nach einer vorgegebenen Zeitspanne der erfolglosen Ansprechung des Schlüsselelementes zu der nächsten Antenne 2 und daran anschließend nach entsprechenden Zeitspannen zu den nächsten Antennen 3, 4, 5, bis ein erfolgreicher Authentifikationsdialog mit dem Schlüsselelement stattgefunden hat. Falls im Falle eines Missbrauchs der den Starterknopf bedienende Benutzer nicht im Besitz eines Schlüsselelementes ist, wird der Startvorgang nicht freigegeben.

Die Antennen 1, 2, 3, 4, 5 sind als LF-Antennen, insbesondere als Reihenschwingkreise aus Spule und Kondensator ausgebildet. Bei derartigen Antennen ist es von Bedeutung, die Sendeleistung einer jeder der Antennen 1, 2, 3, 4, 5 an den Einbauort im Kraftfahrzeug anzupassen. Diese Anpassung kann durch entsprechende LF-Treiber in der Steuereinheit 11 vorgenommen werden.

Insbesondere können die Antennen 1, 2, 3, 4, 5 von dem entsprechenden LF-Treiber der Steuereinheit 11 mit Signalen im kHz-Bereich angesteuert werden, insbesondere mit Signalen von beispielsweise 125 kHz.

Es besteht erfindungsgemäß die Möglichkeit, bei den Antennen 1, 2, 3, 4, 5 zwischen Innenantennen und Außenantennen zu unterscheiden, wobei dann bei Bedienung des Starterknopfes nur die Innenantennen, nicht jedoch die Außenantennen augesteuert werden.

### Bezugszeichenliste

- 8: Antenne im Bereich des Fahrersitzes
- 9: Antenne im Bereich des Beifahrersitzes
- 3, 4: Antennen im Bereich der Rücksitze
- 5: Antenne im Bereich des Kofferraums
- 6: Kabel für 1
- 7: Kabel für 2
- 8: Kabel für 3
- 9: Kabel für 4
- 10: Kabel für 5
- 11: Steuereinheit

## Patentansprüche

1. Vorrichtung für das Öffnen und/oder Starten eines Kraftfahrzeuges, umfassend
- eine Mehrzahl von Antennen (1, 2, 3, 4, 5), die beabstandet voneinander in oder an dem Kraftfahrzeug angeordnet sind;
- ein tragbares Schlüsselelement für die Authentifikation eines Benutzers;
- eine Steuereinheit (11), die die Mehrzahl von Antennen (1, 2, 3, 4, 5) ansteuern und über eine oder mehrere der Antennen (1, 2, 3, 4, 5) mit dem externen Schlüsselelement kommunizieren kann;
**dadurch gekennzeichnet, dass**
- die Vorrichtung eine Multiplexeinheit umfasst, über die die Steuereinheit (11) die Mehrzahl von Antennen (1, 2, 3, 4, 5) ansteuern kann.

2. Vorrichtung nach Anspruch 1, **dadurch gekennzeichnet, dass** die Multiplexeinheit mit einer jeder der Antennen (1, 2, 3, 4, 5) über ein der entsprechenden Antenne (1, 2, 3, 4, 5) zugeordnetes Kabel (6, 7, 8, 9, 10) verbunden ist.

3. Vorrichtung nach einem der Ansprüche 1 oder 2, **dadurch gekennzeichnet, dass** die Multiplexeinheit eine Mehrzahl von Relais aufweist.

4. Vorrichtung nach Anspruch 3, **dadurch gekennzeichnet, dass** die Multiplexeinheit eine Anzahl von Relais aufweist, die der Anzahl von Antennen (1, 2, 3, 4, 5) entspricht.

5. Vorrichtung nach Anspruch 3, **dadurch gekennzeichnet, dass** die Multiplexeinheit eine Anzahl von Relais aufweist, die um 1 kleiner als die Anzahl der Antennen (1, 2, 3, 4, 5) ist.

6. Vorrichtung nach einem der Ansprüche 1 oder 2, **dadurch gekennzeichnet, dass** die Multiplexeinheit eine Mehrzahl von Halbleiterschaltern aufweist.

7. Vorrichtung nach einem der Ansprüche 1 bis 6, **dadurch gekennzeichnet, dass** die Steuereinheit (11) eine Sendeund/oder Empfangseinheit umfasst, die über die Antennen (1, 2, 3, 4, 5) mit dem tragbaren Schlüsselelement kommunizieren kann.

8. Vorrichtung nach einem der Ansprüche 1 bis 7, **dadurch gekennzeichnet, dass** das tragbare Schlüsselelement eine Sende- und Empfangseinheit umfasst, die insbesondere auch einen Transponder aufweisen kann.

9. Vorrichtung nach einem der Ansprüche 1 bis 8, **dadurch gekennzeichnet, dass** die Steuereinheit die Antennen (1, 2, 3, 4, 5) mit LF-Signalen, insbesondere im kHz-Bereich beispielsweise mit Signalen einer Frequenz von etwa 125 kHz ansteuern kann.

10. Vorrichtung nach einem der Ansprüche 1 bis 9, **dadurch gekennzeichnet, dass** die Vorrichtung Betätigungsmittel für das Öffnen und/oder das Starten des Kraftfahrzeugs umfasst, wobei insbesondere die Öffnungsmittel als Türgriffe oder als Starterknopf ausgeführt sind.

11. Verfahren zur Öffnung und/oder zum Starten eines Kraftfahrzeuges, insbesondere mittels einer Vorrichtung nach einem der Ansprüche 1 bis 10, wobei nach Betätigung eines Betätigungsmittels durch einen Benutzer die Steuereinheit zur Aufnahme eines Authentifikationsdialogs mit dem Schlüsselelement mindestens eine der Antennen (1, 2, 3, 4, 5) ansteuert, **dadurch gekennzeichnet, dass** dann, wenn sich über die angesteuerte Antenne (1, 2, 3, 4, 5) kein Authentifikationsdialog mit dem Schlüsselelement führen lässt, die Steuereinheit (11) eine andere der Antennen (1, 2, 3, 4, 5) ansteuert.
